# EUROPEAN PATENT SPECIFICATION

(11) **EP 3 117 712 B1**
(45) Date of publication and mention of the grant of the patent: **10.04.2019**
(21) Application number: 15717191.9
(22) Date of filing: 10.03.2015
(51) Int. Cl.: A22C 17/14, A22C 17/16, A23L 35/00, A23L 13/60

(54) **PROCEDURE FOR THE CLEANING OF LARGE GUT OF LIVESTOCK, AND LARGE GUT OF LIVESTOCK CLEANED BY SAID PROCEDURE**
VERFAHREN ZUM REINIGEN VON VIEHDICKDARM UND MIT EINEM SOLCHEM VERFAHREN GEREIGNIGTER DICKDARM
PROCÉDÉ POUR NETTOYER GROS INTESTIN DE BÉTAIL ET GROS INTESTIN NETTOYÉ PAR TEL PROCÉDÉ

(30) Priority: 11.03.2014 ES 201430330 P
(43) Date of publication of application: 18.01.2017
(73) Proprietor: Triposona, S. A., 08503 Sant Juliá de Vilatorta (Barcelona) (ES); Aymerich Isern, Joan, 08504 Sant Julià de Vilatorta (ES); Aymerich Vilarrasa, Laura, 08504 Sant Julià de Vilatorta (ES)
(72) Inventor: Aymerich Isern, Joan, 08504 Sant Julià de Vilatorta (ES); Aymerich Vilarrasa, Laura, 08504 Sant Julià de Vilatorta (ES)
(74) Representative: Ponti & Partners, S.L.P
(86) International application number: PCT/ES2015/070166
(87) International publication number: WO 2015/136135

(56) References cited:
- DE-A1- 3 215 327
- DE-A1- 4 013 544
- US-A- 3 918 124
- US-A1- 2008 242 206
- Zentralverband Naturdarm e.V: "NATURDARM Feine Hülle für die Wurst", , 30 March 2009 (2009-03-30), XP055193453, Hamburg Retrieved from the Internet: URL:http://www.innovationspreis-wurst.de/f ileadmin/user_upload/Downloads/Schulungsma terial.pdf [retrieved on 2015-06-03]

## Description

The present invention relates to a procedure for the emptying and cleaning of a non-unravelled large gut from livestock and to an essentially non-unravelled large gut of livestock cleaned by means of said procedure. Specifically, the present invention relates to a procedure for the cleaning of a large gut from porcine livestock.

### Background of the invention

Animal gut, and in particular the gut or intestines from porcine livestock, are commonly used in the manufacture of sausages and cured meats as a cylindrical packaging of natural origin which enables the shaping of sausages and foodstuffs and provides protection for the same. It is also used as raw material for some types of sausage and is the main ingredient of some dishes in various countries. However, in this case, the product does not retain its cylindrical shape, but is sliced into pieces. Other applications of pigs' intestines or gut may be found in industry, e.g. in pharmaceutics or in the manufacture of animal food.

The large intestine or gut of livestock, in contrast to the small intestine, has the particularity that the sections of gut or large intestine feature loops or folds which are integrally bound together, forming a compact intestinal bundle. Another particularity of the large intestine resides in the indentations or pockets in the intestinal walls, which endow it with a characteristic appearance. In porcine livestock, these indentations or pockets are particularly abundant.

Currently, to clean the large intestine or gut and to empty it of its faecal content, the worker handling the gut first separates the sections of gut or large intestine, breaking the tissue which naturally binds them together and envelops them, until said sections of intestine are substantially straightened. Subsequently, with the intestinal package in a lineal condition, a second worker manually empties the faecal content, usually employing a hollow cleaning tube which sprays water. This tube is inserted into the intestine to facilitate the dislodging and evacuation of the faecal matter via the hollow cavity of the aforementioned tube. Documents DE3215327A1 and DE4013544A1 disclose procedures for cleaning gut of livestock comprising the step of emptying the faecal content form the intestine sections of the large gut.

The process currently used for the cleaning of large intestines from livestock presents the inconvenience that it is slow, costly and highly inefficient. For example, subsequent to cleaning, it is commonplace to find remnants of dirt or faecal matter adhering to the internal areas or points of broken tissue which bound the sections of intestine. Once the intestine or gut has been soiled, these traces of dirt are almost impossible to remove; for this reason, in practice sections of intestine thus soiled are eliminated.

On the other hand, traces of dirt may also be found in the numerous indentations or pockets forming the walls of the gut or large intestine, as on emptying the large intestine, subsequent to its straightening, the complete removal of the dirt hidden in the folds forming these indentations or pockets cannot be guaranteed.

### Description of the invention

The aim of the present invention is to resolve the aforementioned drawbacks by providing a procedure for the cleaning of a large intestine or gut from livestock according to claim 1. The present invention further provides an essentially non-unravelled large intestine or gut obtained by means of the aforementioned process. The gut obtained is emptied of its faecal content, and in compliance with the strict health standards required for alimentary use.

In accordance with this aim, the present disclosure also refers to a foodstuff, pharmaceutical or animal food product, processed or partially processed with a non-unravelled large gut which has been emptied of faecal matter. This product is processed or partially processed with a clean large tripe or gut where the sections of large intestines are totally or partially non-unravelled, bound integrally together by their natural tissue, forming a compact intestinal bundle.

This clean, compact intestinal bundle complies with all sanitary requirements for alimentary use, and may be preserved in salt, frozen or packaged in a protective atmosphere or vacuum-packed for easy marketing. The length of the non-unravelled gut or large intestine forming the intestinal bundle, particularly that of porcine livestock, features a length of 1m or greater. In ovine, caprine, bovine or equine livestock, this length is 3m or greater. If necessary, the intestinal bundle may be broken, once devoid of faecal matter, to separate the sections of gut or large intestine, with no risk of soiling the gut.

The present invention provides a process for the cleaning of large gut or intestines from livestock including the stage of emptying the faecal matter from the sections of gut or large intestine and characterized in that the emptying stage is done by means of a fluid, which is injected into the interior of said intestine while maintaining said sections of large intestine totally or partially non-unravelled, bound integrally together by their natural tissue, forming a compact intestinal bundle.

In the present invention, the large intestine from livestock is cleaned without unravelling, that is to say, without separating the sections of large intestine from each other, maintaining said sections joined together, as they appear naturally within the body of the animal and without breaking the tissue which binds and envelops them, except for the orifices executed expressly for water injection and/or the emptying of the faecal matter. Due to this, the tissue which naturally binds the loops or folds forming the sections remains intact, without breakages, preventing dirt from adhering to the internal areas or points of breakage of this tissue.

Specifically, it has been observed that as the tissue which binds and envelops the large intestine remains intact, the dirt which might soil the gut does not adhere to the tissue and may be easily washed off with water without soiling the intestine. Furthermore, it has also been observed that the cleaning of the gut without unravelling the intestinal bundle facilitates the momentary retention of the washing water in the indentations or pockets of the intestine or gut, and therefore the dislodging of the dirt hidden in the folds of these pockets.

Preferably, the emptying stage is performed maintaining the intestinal bundle suspended in a mass of liquid, for example, a mass of water.

It has been observed that, as the intestinal bundle is suspended in or floating on a mass of water or liquid, the task of emptying and eliminating the faecal matter from the gut or intestine is greatly facilitated, as the indentations or pockets are maintained open, similarly to the natural situation when the intestines are within the animal.

In accordance with the present invention , the emptying stage is carried out by injecting a fluid into the interior of said gut, and conveniently, said injection of fluid is carried out by means of a colonoscopic probe or other similar tube configured to inject said fluid.

The injection of fluid, for example water, actively eases the removal of the dirt, and the colonoscopic probe, or other tube of a similar configuration, guarantees injection substantially without risk of breakage of the gut or intestine walls. This injection may be performed in one or several sections of the gut or large intestine, either through a natural orifice or through one or more orifices executed in the gut or intestine wall.

In accordance with the same preferred embodiment, the emptying stage is executed by performing a massage on the compact intestinal bundle of gut or intestine, said massage facilitating the expulsion of faecal matter from the interior of the intestine and from the indentations of the gut or intestines. Said massage may be mechanical or manual.

To greater advantage, this massage may be executed with the use of ultrasound, as the ultrasound vibrations facilitate the detachment of the faecal matter embedded in the interior of the gut and particularly in the indentations or pockets of the walls.

It has been observed that the cleaning of large intestines from livestock, and particularly that of porcine livestock, is much more efficacious if performed with the indentations or pockets opened out, performing a massage with ultrasound while the entirety of the intestinal bundle is floating in a receptacle containing water or other liquid. The content detached via the massage may be removed naturally via the natural orifice of the gut, injecting a fluid at one or several points in order to facilitate the removal.

In contrast to what occurs in the state of the art, in this case, as the intestinal bundle is maintained with the tissue which naturally binds the sections of gut or intestines intact, the dirt extracted does not adhere but slips easily over the surrounding tissue. In this way, an unbroken gut from livestock is obtained, clean and ready for consumption, whether cut into pieces or separated into linear sections for use in the preparation of sausages.

By means of the present invention, the large gut or intestines from livestock, and in particular those of porcine livestock, which are currently discarded in many abattoirs due to the difficulties entailed in their correct cleaning, may be recovered and their value appreciated for their use in the human foodstuffs industry, or other industrial uses such as in the pharmaceutical industry or for the manufacture of animal food. In this way, the abattoirs would be able to cease paying for the elimination of guts with faecal content, and to convert the same into a subproduct with a considerable value.

In the present invention, "large gut from livestock" should be understood to be the "tripe from livestock" including at least the large intestine denominated "colon" and, preferably, in addition to the colon, including the large intestine denominated "caecum" or blind intestine. The rectum and anal canal may be separated from the bundle to be emptied without unravelling.

"Natural tissue" should be understood to be the tissue which naturally binds and/or partially or totally envelops the sections of gut or large intestine of livestock, and particularly of porcine livestock, forming a substantially compact intestinal bundle.

### Brief description of the figures

For the better understanding of the above, a set of drawings is attached in which, schematically and solely as a non-limitative example, a practical case of the current state of the art is portrayed in the first two figures, and in the remainder of the figures, a practical case of an embodiment of the invention applied to a gut from porcine livestock.
Figure 1 portrays a view of a large intestine from porcine livestock in the state of the art, which has been cleaned by means of a conventional process.
Figure 2 is a detail of the intestine from the state of the art in figure 1. In this detail, remnants of dirt may be seen to be adhering to the interior areas or points of breakage of the tissue which binds the sections of gut which form the intestinal bundle.
Figure 3 portrays a compact intestinal bundle of large intestine from porcine livestock, prior to subjection to the cleaning process of the present invention.
Figures 4a and 4b portray a sectional and plan view of an ultrasound bath used for the cleaning of the intestinal bundle, in accordance with the present invention.
Figures 4c, 4d and 4e portray sectional views of other ultrasound baths employed for the cleaning of the intestinal bundle.
Figure 5 portrays a compact intestinal bundle of large intestine from porcine livestock, which has been cleaned by means of the procedure claimed.

### Description of a preferred embodiment

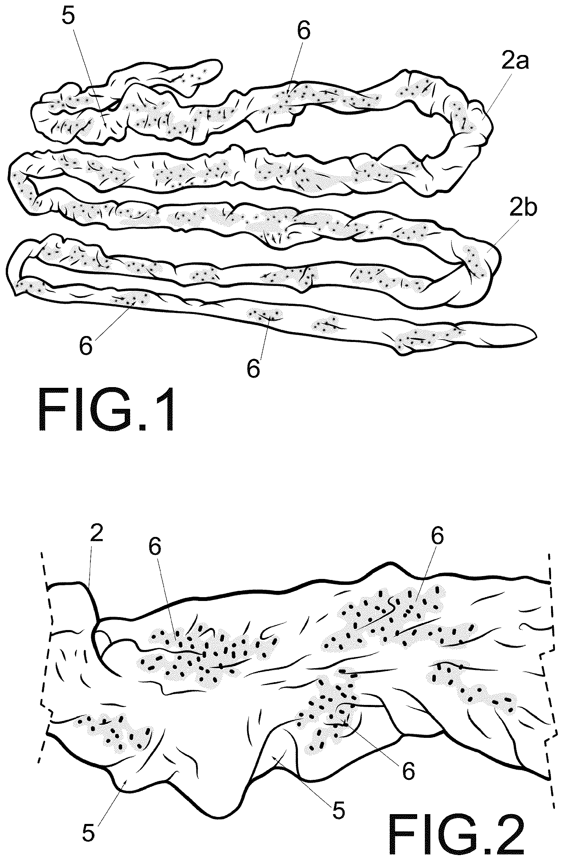

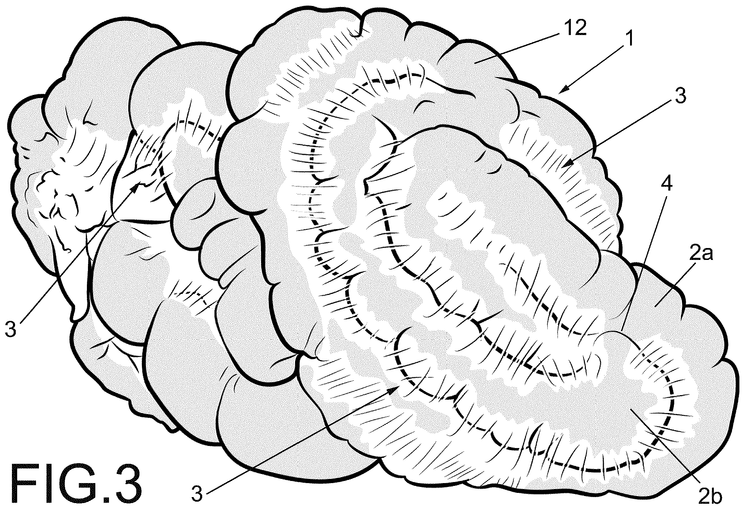

The invention is described below with reference to figures 1 to 5. Regarding figures 1 and 2, these portray a large gut from porcine livestock, hereinafter porcine large gut, which has been cleaned by means of the conventional process employed in the state of the art. The remaining figures 3 to 5 relate to the intestine according to the present invention and the cleaning process claimed.

Figure 3 portrays a compact intestinal bundle 1 of large gut 2 prior to cleaning. As may be seen in this figure 3, the intestine sections 2a and 2b of large gut are integrally attached together by a tissue 3 which naturally binds the loops 4 or folds constituting sections 2a and 2b of the intestine 2. Although this may not be seen in detail in this figure 3, the intestinal bundle 1 includes the "colon" and "caecum" sections.

As has been explained in the description of the invention, and is portrayed in the figures, the porcine large gut features the particularity that the walls of the gut or intestines 2 form numerous pockets 5 or indentations in which the faecal content 12 is hidden. For this reason, the cleaning of porcine large gut is highly complicated and laborious, in practice making said gut a waste product whose elimination in a waste processing site must be paid for by many abattoirs.

Currently, to clean porcine large gut and to empty it of its faecal content, the worker first separates the intestine sections 2a and 2b of the gut 2, breaking the tissue 3 which binds them together, until said intestine sections 2a and 2b of the gut 2 are straightened. Next, a second worker manually empties the faecal content 12, sometimes using a hollow cleaning tube which sprays water and which is inserted into the interior of the gut 2. As has been mentioned, this process is slow and laborious, in addition to being most inefficient, as it is frequent to find remnants of dirt within the intestine on completion of the cleaning process.

Figures 1 and 2 portray a gut of the state of the art which has been cleaned by means of a conventional process. In these figures 1 and 2 the remnants of dirt 6 or faecal content 12 adhering to the internal breakage areas or points of the tissue 3 may be clearly seen. As has been mentioned, the removal of these remnants of dirt 6 is most complicated once the intestine has become soiled.

The present invention provides a new method for the cleaning of a large gut from livestock, which includes the stage of emptying the faecal content 12 from intestine sections 2a and 2b of the large gut 2 while maintaining said intestine sections 2a and 2b of the large gut 2 totally or partially without unravelling, integrally joined together, forming a compact intestinal bundle 1.

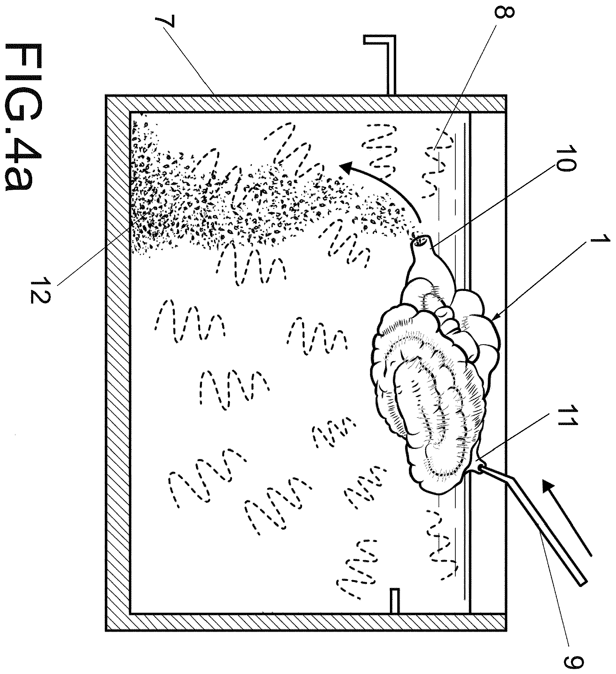

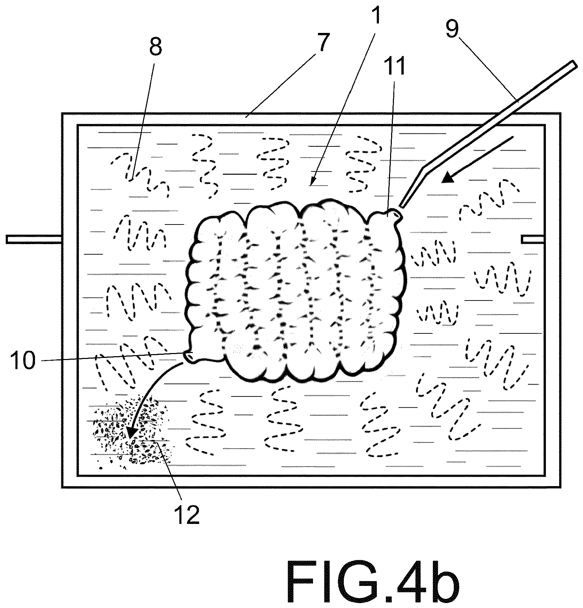

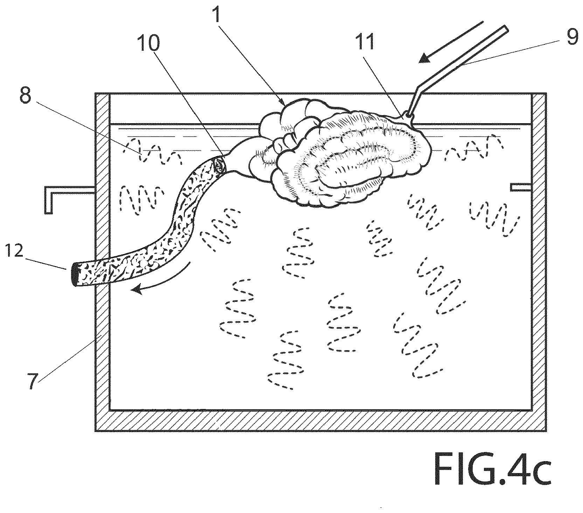

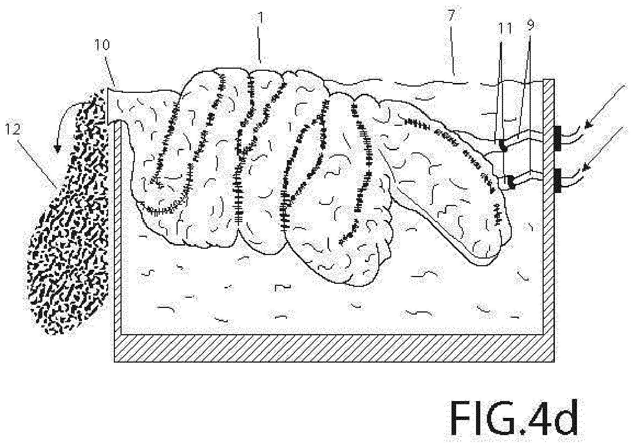

Figures 4a, 4b, 4c and 4d depict an embodiment of the cleaning method where the intestinal bundle 1 is immersed in a bath 7 of water or other suitable fluid, in which a massage is applied by means of the vibrations caused by acoustic waves 8 at ultrasound frequency. This massage facilitates the detachment of the faecal content 12 lodged or embedded in the pockets 5 or indentations forming the walls of the gut or intestine 2. Optionally, this massage may be solely mechanical, manual or not, without ultrasounds.

As portrayed in figures 4a and 4b, in addition to the massage with ultrasound, and depending on the degree of soiling of the gut, it may be necessary to inject pressurised water into the interior of the intestine 2 in order to facilitate the dislodging and transport of the faecal content 12 to a natural outlet orifice 10.

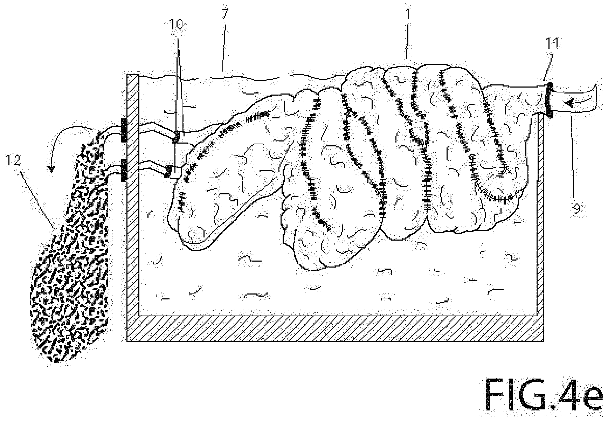

Figures 4c, 4d and 4e portray the outflow of the faecal content 12 channelled from one or more orifices in the intestine to be sent to drain. In this way, the water in the bath 7 is soiled much less.

The injection of pressurised water is performed by means of a probe 9 inserted into an orifice 11 executed in the wall of the gut or intestine 2. This probe 9 may be, for example, a probe 9 of the colonoscopic type, which guarantees injection without any substantial risk of breakage of the walls of the large gut 2. Optionally, it may be necessary to execute a number of orifices for the injection of water or, for example, inserting via the same orifice several probes 9 which inject water in different directions. These orifices may be executed at different points of the gut, which do not have to coincide with the extremities.

As may be seen in figures 4a and 4b, while the cleaning is in progress, the intestinal bundle 1 is maintained floating in the mass of water, facilitating the total opening of the indentations or pockets 5 of the walls, in order to dilute and void the dirt hidden in the folds. Furthermore, the injection of pressurised water causes the gut 2 to swell while it floats, so that the water may draw out the dirt with ease.

Figure 4c depicts the injection of water via an orifice 11 by means of a probe 9, and the channelling of the faecal content 12 through the natural outlet orifice 10 and a hose which voids the content outside the bath 7. Figure 4d depicts the injection of water via two orifices 11 and the corresponding probes 9, and the channelling of the faecal content 12 through the natural outlet orifice 10 directly connected to the exterior of the bath 7. Finally, figure 4e depicts the injection of water via an orifice 11 and the channelling of the faecal content 12 through two outlet orifices 10 connected to two externally voiding hoses.

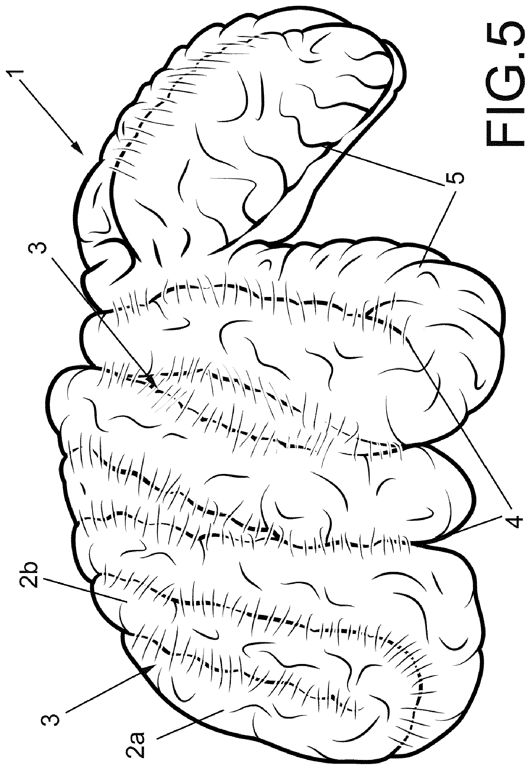

On completion of the process, a gut is obtained which is presented in the form of a compact intestinal bundle 1 which is completely clean, devoid of its faecal content, with the tissue 3 which binds the intestine sections 2a and 2b of the large gut totally intact (see figure 5). This gut 2, once cleaned and disinfected, in itself constitutes a product suitable for alimentary use which may be highly valued, either for the manufacture of sausages or for the preparation of dishes; alternatively as a raw material for industry where, among other uses, pharmaceutics and pet food may be highlighted.

While the foregoing has been with reference to a particular embodiment of the invention, it will be evident to a person skilled in the art that the cleaning method described herein is susceptible to multiple variations or modifications, and all the details mentioned herein may be replaced by other technically equivalent details without departing from the scope of protection defined by the appended claims. For example, although a cleaning method including a stage of massaging the intestinal bundle 1 by means of ultrasound and the injection of pressurised water has been described, it would be possible to find other alternative methods of performing said massage, on condition that these methods enable the voiding of faecal content 12 from the intestinal bundle 1 without any need to unravel or separate intestine sections 2a and 2b of the gut 2 in said bundle 1. Likewise, it must be mentioned that it would also be possible to empty the gut 2 without performing any massaging action, using solely the injection of fluid to dislodge and void the faecal content 12.

## Claims

1. A procedure for the cleaning of large gut of livestock, including the stage of:
a. Emptying the faecal content (12) from the intestine sections (2a, 2b) of the large gut (2), **characterized in that** the emptying of the faecal content is executed by injecting a fluid into the interior of said intestine while maintaining said sections of intestine (2a, 2b) essentially non-unravelled, integrally bound together by their natural tissue, forming a compact intestinal bundle (1).

2. A procedure as claimed in claim 1, where said emptying stage is executed while maintaining the intestinal bundle (1) suspended in a mass of liquid.

3. A procedure as claimed in claim 1, where said injection of fluid is executed by means of at least one colonoscopic probe (9) or similar tube configured for the injection of said fluid.

4. A procedure as claimed in claim 1, where said injection of fluid is executed in one or several intestine sections (2a, 2b) of the large gut (2), whether via a natural orifice or via one or more orifices (11) executed in the wall of said gut (2).

5. A procedure as claimed in claim 1, where said emptying stage is executed while performing a massage on the compact intestinal bundle (1) of the gut (2), said massage facilitating the expulsion of the faecal content (12) from the indentations or pockets (5) forming the gut (2).

6. A procedure as claimed in claim 5, where said massage is performed by means of the application of ultrasound, the vibrations produced by the acoustic waves (8) facilitating the detachment of the faecal content (12) lodged in the indentations or pockets (5) forming the gut (2).

7. A procedure as claimed in claim 1, comprising the stage of cleaning and/or disinfecting the gut (2) subsequent to the voiding of its faecal content (12) for its use as a foodstuff, pharmaceutical product or animal food.

8. A procedure as claimed in any of claims 1 to 7, which comprises the stage of separating or unravelling the intestine sections (2a, 2b) of the large gut (2) of said intestinal bundle, subsequent to its cleaning.

9. A procedure as claimed in claim 1, where said large gut is selected from one of porcine, ovine, caprine, bovine or equine livestock.

10. A procedure as claimed in claim 1, where said stage of emptying the faecal content is performed via one or several drain channels in order to void the faecal content (12).

11. A procedure as claimed in claim 1, where the length of the non-unravelled large gut (2) forming said bundle (1) is equal to or greater than 1m in porcine livestock, and equal to or greater than 3m in ovine, caprine, bovine or equine livestock.

12. A procedure as claimed in claim 1, where said intestinal bundle (1) is presented fresh, frozen or preserved in salt or in other similar preservatives.

13. A procedure as claimed in claim 1, where said intestinal bundle (1) is presented packaged in a protective atmosphere or is vacuum-packed.

14. An essentially non-unravelled large gut from livestock cleaned by the procedure of any of the claims 1 to 13.

## Patentansprüche

1. Ein Verfahren zum Reinigen des Dickdarms von Vieh, das folgenden Schritt umfasst:
a. Entleeren des Fäkalinhalts (12) aus den Eingeweideabschnitten (2a, 2b) des Dickdarms (2), **dadurch gekennzeichnet, dass** das Entleeren des Fäkalinhalts durchgeführt wird, indem ein Fluid in das Innere des Darms injiziert wird, während die besagten Eingeweideabschnitte (2a, 2b) im Wesentlichen nicht-entwirrt bleiben, wobei sie durch ihr natürliches Gewebe als Ganzes zusammengehalten werden und ein kompaktes Eingeweidebündel (1) bilden.

2. Ein Verfahren gemäß Anspruch 1, bei dem der Entleerungsschritt ausgeführt wird, während das Eingeweidebündel (1) in einer Flüssigkeitsmasse schwimmt.

3. Ein Verfahren gemäß Anspruch 1, bei dem die Fluidinjektion mittels zumindest einer kolonoskopischen Sonde (9) oder ähnlichen Röhre durchgeführt wird, die für die Injektion des Fluids ausgelegt ist.

4. Ein Verfahren gemäß Anspruch 1, bei dem die Fluidinjektion in einem oder mehreren Eingeweideabschnitten (2a, 2b) des Dickdarms (2) durchgeführt wird, entweder über eine natürliche Öffnung oder über eine oder mehrere Öffnungen (11), die in der Wand des Darms (2) ausgeführt werden.

5. Ein Verfahren gemäß Anspruch 1, bei dem der Entleerungsschritt ausgeführt wird, während an dem kompakten Eingeweidebündel (1) des Darms (2) eine Massage durchgeführt wird, wobei die Massage die Ausstoßung des Fäkalinhalts (12) aus den Einbuchtungen oder Taschen (5), die den Darm (2) bilden, erleichtert.

6. Ein Verfahren gemäß Anspruch 5, bei dem die Massage anhand der Anwendung von Ultraschall durchgeführt wird, wobei die durch die akustischen Wellen (8) erzeugten Schwingungen die Ablösung des Fäkalinhalts (12), der in den den Darm (2) bildenden Einbuchtungen oder Taschen (5) festsitzt, erleichtern.

7. Ein Verfahren gemäß Anspruch 1, das den Schritt des Reinigens und/oder Desinfizierens des Darms (2) im Anschluss an das Ausscheiden seines Fäkalinhalts (12) zur Verwendung desselben als Nahrungsmittel, pharmazeutisches Produkt oder Tierfutter aufweist.

8. Ein Verfahren gemäß einem der Ansprüche 1 bis 7, das den Schritt des Trennens oder Entwirrens der Eingeweideabschnitte (2a, 2b) des Dickdarms (2) des Eingeweidebündels im Anschluss an dessen Reinigung aufweist.

9. Ein Verfahren gemäß Anspruch 1, bei dem der Dickdarm aus einem Viehbestand aus Schweinen, Schafen, Ziegen, Rindern oder Pferden ausgewählt ist.

10. Ein Verfahren gemäß Anspruch 1, bei dem der Schritt des Entleerens des Fäkalinhalts über einen oder mehrere Ablasskanäle durchgeführt wird, um den Fäkalinhalt (12) auszuscheiden.

11. Ein Verfahren gemäß Anspruch 1, bei dem die Länge des nicht-entwirrten Dickdarms (2), der das Bündel (1) bildet, bei einem Schweineviehbestand gleich oder größer als 1 m ist und bei einem Schaf-, Ziegen-, Rinder- oder Pferdeviehbestand gleich oder größer als 3 m ist.

12. Ein Verfahren gemäß Anspruch 1, bei dem das Eingeweidebündel (1) frisch, gefroren oder in Salz oder in anderen, ähnlichen Konservierungsmitteln konserviert präsentiert wird.

13. Ein Verfahren gemäß Anspruch 1, bei dem das Eingeweidebündel (1) in einer Schutzatmosphäre verpackt präsentiert wird oder vakuumverpackt ist.

14. Ein von Vieh stammender, im Wesentlichen nicht-entwirrter Dickdarm, der anhand des Verfahrens gemäß einem der Ansprüche 1 bis 13 gereinigt wurde.

## Revendications

1. Procédé pour le nettoyage du gros intestin de bétail, comportant l'étape de :
a. vidage du contenu fécal (12) des sections d'intestin (2a, 2b) du gros intestin (2), **caractérisé en ce que** le vidage du contenu fécal est exécuté en injectant un liquide à l'intérieur dudit intestin tout en maintenant lesdites sections d'intestin (2a, 2b) laissées essentiellement entières, unies de manière solidaire entre elles par leur tissu naturel, formant un paquet intestinal compact (1).

2. Procédé selon la revendication 1, où ladite étape de vidage est exécutée tout en maintenant le paquet intestinal (1) en suspension dans une masse de liquide.

3. Procédé selon la revendication 1, où ladite injection de liquide est exécutée au moyen d'au moins une sonde de coloscopie (9) ou d'une tubulure similaire configurée pour l'injection dudit liquide.

4. Procédé selon la revendication 1, où ladite injection de liquide est exécutée dans une ou plusieurs sections d'intestin (2a, 2b) du gros intestin (2), que ce soit via un orifice naturel ou via un ou plusieurs orifices (11) pratiqués dans la paroi dudit intestin (2).

5. Procédé selon la revendication 1, où ladite étape de vidage est exécutée tout en effectuant un massage du paquet intestinal compact (1) de l'intestin (2), ledit massage facilitant l'expulsion du contenu fécal (12) des creux ou des poches (5) formant l'intestin (2).

6. Procédé selon la revendication 5, où ledit massage est effectué au moyen de l'application d'ultrasons, les vibrations produites par les ondes acoustiques (8) facilitant le détachement du contenu fécal (12) logé dans les creux ou les poches (5) formant l'intestin (2).

7. Procédé selon la revendication 1, comprenant l'étape consistant à nettoyer et/ou à désinfecter l'intestin (2) après l'avoir vidé de son contenu fécal (12) pour son utilisation comme aliment, produit pharmaceutique ou nourriture pour animaux.

8. Procédé selon l'une quelconque des revendications 1 à 7, qui comprend l'étape consistant à séparer ou à défaire les sections d'intestin (2a, 2b) du gros intestin (2) dudit paquet intestinal, à la suite de son nettoyage.

9. Procédé selon la revendication 1, où ledit gros intestin est choisi parmi l'un de bétail porcin, ovin, caprin, bovin ou équin.

10. Procédé selon la revendication 1, où ladite étape de vidage du contenu fécal est effectuée via un ou plusieurs canaux de drainage afin de vider le contenu fécal (12).

11. Procédé selon la revendication 1, où la longueur du gros intestin laissé entier (2) formant ledit paquet (1) est égale ou supérieure à 1 m dans du bétail porcin, et égale ou supérieure à 3 m dans du bétail ovin, caprin, bovin ou équin.

12. Procédé selon la revendication 1, où ledit paquet intestinal (1) est présenté frais, surgelé ou conservé dans du sel ou dans d'autres conservateurs similaires.

13. Procédé selon la revendication 1, où ledit paquet intestinal (1) est présenté conditionné sous une atmosphère de protection ou est emballé sous vide.

14. Gros intestin de bétail laissé essentiellement entier et nettoyé par le procédé selon l'une quelconque des revendications 1 à 13.
